# EUROPEAN PATENT APPLICATION

(11) **EP 4 455 869 A1**
(43) Date of publication of application: **30.10.2024**
(21) Application number: 22922908.3
(22) Date of filing: 29.01.2022
(51) Int. Cl.: G06F 9/30, G05B 19/05

(54) **WORKFLOW CONSTRUCTION METHOD AND SYSTEM, MEDIUM, AND PROGRAM PRODUCT**

(71) Applicant: Siemens Aktiengesellschaft, 80333 München (DE)
(72) Inventor: ZHOU, Zhenhua, Shanghai 200120 (CN); ZHU, Xiaoxun, Beijing 100102 (CN); WANG, Ting, Suzhou City Jiangsu 215332 (CN)
(74) Representative: Isarpatent
(86) International application number: PCT/CN2022/075085
(87) International publication number: WO 2023/142078

(57) **Abstract**

Disclosed in embodiments of the present application are a workflow construction method and system, a medium, and a program product. The method comprises: receiving a functional block node addition and connection operation performed on a graphical user interface by a user on the basis of functional block type diagrams, wherein each functional block node correspondingly implements a service operation, and each functional block type diagram comprises a functional block name for indicating the type of a service operation, a functional block header for indicating a resource for executing a service operation, a link input port and a link output port for triggering link connection, an input data chunk for representing a set of all data input ports and an output data chunk for representing a set of all data output ports, a data input port and a data output port for triggering data transmission, and a functional block body for bearing each component; and in response to the functional block node addition and connection operation, constructing a behavior tree corresponding to a workflow. According to the technical solution, a workflow can be intuitively and quickly created.

## Description

### TECHNICAL FIELD

Embodiments of the present application relate to the field of industrial technologies, and in particular, to a workflow construction method and system, a computer-readable storage medium and a computer program product.

### BACKGROUND

A workflow can be simply defined as a description of a series of operation processes. The workflow is widely used in fields such as automated systems, artificial intelligence and robots. For example, a workflow of a product sorting line in an automated system can be simply described as starting, taking photos, classifying, and moving products to target positions. A model deployment workflow in the field of artificial intelligence can be described as data collection, data annotation, model training, and model deployment.

However, at present, these workflows only have text descriptions. If users want to execute such workflows, the users need to follow the text descriptions and may use multiple engineering tools. However, these tools are almost unrelated to each other and provide completely different user operation behaviors, which is not only a challenge to the users, but also greatly increases the costs, reduces efficiency and limits flexibility due to a long development cycle. For example, in the field of artificial intelligence, users need to use a tool for data collection, perform data annotation manually or by using other tools, write python scripts for model training, and use deployment tools for deployment.

Therefore, those skilled in the art are still working on finding other workflow solutions.

### SUMMARY

Embodiments of the present application provide a workflow construction method and system, a computer-readable storage medium and a computer program product to quickly and conveniently implement workflow creation.

In a first aspect, a workflow construction method is provided, which includes: receiving function block node addition and connection operations performed on a graphical user interface (GUI) by a user on the basis of function block type graphs, where each function block node correspondingly implements a service operation; each function block type graph includes: a function block name for indicating the type of a service operation, a function block header for indicating a resource for executing a service operation, a link input port and a link output port for triggering link connection, an input data chunk for representing a set of all data input ports and an output data chunk for representing a set of all data output ports, a data input port and a data output port for triggering data transmission, and a function block body for bearing each component; the function block node addition operation includes: a dragging operation for the function block body; the function block node connection operation includes: a line connection operation between the link output port and the link input port between two function block nodes, and a line connection operation between the data output port and the data input port between corresponding data of two function block nodes; and constructing a behavior tree corresponding to one workflow in response to the function block node addition and connection operations.

In a second aspect, a workflow construction system is provided, which includes: a node library, in which function block nodes for constructing a behavior tree are arranged, where the function block nodes are presented in the form of a function block type graph on a GUI; each function block type graph includes: a function block name for indicating the type of a service operation, a function block header for indicating a resource for executing a service operation, a link input port and a link output port for triggering link connection, an input data chunk for representing a set of all data input ports and an output data chunk for representing a set of all data output ports, a data input port and a data output port for triggering data transmission, and a function block body for bearing each component; a graphical interface module, configured to provide a GUI for a user to perform function block node addition and connection operations, where the function block node addition operation includes: a dragging operation for the function block body; the function block node connection operation includes: a line connection operation between the link output port and the link input port between two function block nodes, and a line connection operation between the data output port and the data input port between corresponding data of two function block nodes; and an editing and processing module, configured to construct a behavior tree corresponding to one workflow in response to the function block node addition and connection operations.

In a third aspect, another workflow construction system is provided, which includes: at least one memory, configured to store computer-readable codes; and at least one processor, configured to call the computer-readable codes to execute steps in the method provided in the first aspect.

In a fourth aspect, an IT domain and OT domain fusion system is provided, which includes an IT device and a workflow construction system as described in any one of the above implementations, where the workflow is an OT domain workflow; the workcell is a workcell in an OT domain; the resources are OT resources; and the workflow generation system further includes: an OT domain microservice generator, configured to generate a microservice based on the behavior tree so that the IT device triggers the runtime of the workcell to execute the OT domain workflow by calling the microservice.

In a fifth aspect, a computer-readable medium is provided. The computer-readable medium stores computer-readable instructions, and the computer-readable instructions, when executed by a processor, cause the processor to execute steps in the method provided in the first aspect.

In a sixth aspect, a computer program product is provided. The computer program product is tangibly stored on a computer-readable medium and includes computer-readable instructions, and the computer-readable instructions, when executed, cause at least one processor to execute steps in the method provided in the first aspect.

In the embodiments of the present application, the operations that can be executed by various types of corresponding resources are encapsulated into corresponding function block nodes, so that a behavior tree can be used for representing the operation processes of a workflow. Due to the reusability of nodes, decoupling of a specific service and an engineering platform is achieved. Moreover, organizing the nodes in the form of a behavior tree can generate intuitive workflow operation processes from development to implementation, thereby reducing the complexity of workflow construction and achieving quick and convenient workflow creation.

For any of the above aspects, optionally, the behavior tree is analyzed, and the OT domain workflow corresponding to the behavior tree is deployed to the runtime of the workcell so that the resources in the workcell execute the operations according to the workflow. In this way, the purpose of controlling the operations of the workcell based on the workflow is achieved.

For any of the above aspects, optionally, the workflow is an OT domain workflow; the workcell is a workcell in an OT domain; and the device is an OT device. In this way, the workflow creation in the OT domain is achieved.

For any of the above aspects, optionally, a microservice is generated based on the OT domain workflow so that the IT device in the IT domain triggers the runtime of a main controller of the workcell to execute the OT domain workflow by calling the microservice. In this way, the IT device can call the microservice generated based on the OT domain workflow, thereby triggering the execution of the OT workflow to achieve the fusion of the IT domain and the OT domain.

### BRIEF DESCRIPTION OF THE DRAWINGS

FIG. 1A is a schematic flowchart of a workflow construction method provided in each embodiment of the present application.
FIG. 1B is a schematic view of a resource knowledge graph in an example of the present application.
FIG. 1C is a schematic view of associating each resource node with a function block node in an example of the present application.
FIG. 1D is a schematic flowchart of another workflow construction method provided in each embodiment of the present application.
FIG. 2A is a schematic view of a behavior tree created in an example of the present application.
FIG. 2B to FIG. 2S are respectively schematic views of a part of a behavior tree created in an example of the present application.
FIG. 2T is an example of constructing a behavior tree based on function block nodes of a function block type graph in an example of the present application.
FIG. 2U to FIG. 2X are respectively schematic views of hiding or displaying data input ports or data output ports in an example of the present application.
FIG. 2Y is a schematic view of respectively adding data blocks to four function block nodes in a behavior tree and displaying corresponding data in each data block in an example of the present application.
FIG. 3 is a schematic structural view of a workflow construction system provided in an embodiment of the present application.
FIG. 4A to FIG. 4D are schematic views of workflow construction systems provided in various embodiments of the present application.
FIG. 4E is a schematic view of an application scenario in the field of industrial automation.
FIG. 5 is a schematic view of hardware implementation of a workflow construction system provided in an embodiment of the present application.

### List of Reference Numerals:

S11-S13: Steps in workflow construction method
201: Function block name
202: Function block header
203: Link input port
204: Link output port
205: Link connection
206: Sensitive area
207: Instruction label
208: Input data chunk
209: Output data chunk
210: Data input port
211: Data output port
212: Data connection
213: Function block icon
214: Function block body
215: Data block label
216: Data block body
217: Monitoring link
110: Node library
120: Graphical interface module
130: Editing and processing module
140: Analyzing and deploying module
150: Resource library
100: OT-domain low code development platform
10: OT-domain low code development tool
20: OT domain microservice generator
30: Runtime of main controller of workcell
40: Microservice
50: Third-party apparatus
200: Knowledge middle platform
300: IT-domain code development platform
301: IT-domain code development tool
51: At least one memory
52: At least one processor
53: At least one display
54: Bus

### DETAILED DESCRIPTION

A subject described in this specification is discussed now with reference to exemplary implementations. It should be understood that, the discussion of these implementations is merely intended to make a person skilled in the art better understand and implement the subject described in this specification, and is not intended to limit the protection scope of the claims, the applicability, or examples. Changes may be made to the functions and arrangements of the discussed elements without departing from the protection scope of the content of the embodiments of the present application. Various processes or components may be omitted, replaced, or added in each example according to requirements. For example, the described method may be executed according to a sequence different from the sequence described herein, and steps may be added, omitted, or combined. In addition, features described in some examples may also be combined in other examples.

As used in this specification, the term "include" and variants thereof represent open terms, and mean "include but is not limited to". The term "based on" represents "at least partially based on". The terms "one embodiment" and "an embodiment" represent "at least one embodiment". The term "another embodiment" represents "at least one another embodiment". The terms "first", "second", and the like may represent different objects or the same object. Other definitions may be included explicitly or implicitly in the following. Unless otherwise clearly specified, the definition of one term is consistent in the entire specification.

The embodiments of the present application are described in detail below with reference to the accompanying drawings.

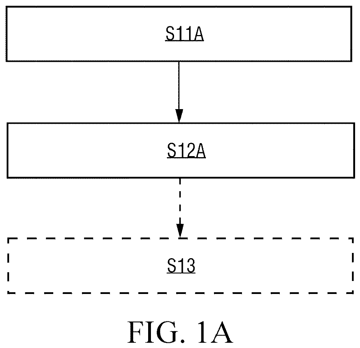

FIG. 1A shows a schematic flowchart of a workflow construction method provided in an embodiment of the present application. As shown in FIG. 1A, the method may include the following steps:
Step S11A: A behavior tree construction operation performed on a GUI by a user on the basis of preset behavior tree nodes is received.

In this embodiment, one behavior tree is used for representing one workflow, and the workflow is used for defining the operation to be executed by one workcell. For example, the behavior tree may represent distributed processes in the workcell. During a specific implementation, the workflow here may be further divided into a main workflow and a subworkflow. The main workflow is used for limiting the start, end, and other flow controls that trigger the entire workcell process. The main workflow is an inlet of the entire process, which is linked to at least one subworkflow. Subworkflows are usually master workflows, and each subworkflow corresponds to a subprocess for implementing a specific service operation.

The workcell may be a combination of resources such as systems or devices capable of implementing a relatively complete and independent control process and operation. In this embodiment, workflow creation is performed based on the workcell as a basic unit, which more conforms to the characteristics of industrial control, can improve the integration level of development, and can reduce the complexity of development. For example, in the field of the industrial technology, the workcell may be defined according to actual industrial scenarios. For example, a process may be defined as corresponding to a workcell, or a work station in a process may be defined as a workcell, or a work position in a work station may also be defined as corresponding to a workcell and the like, and different workcells have different process flows.

In this embodiment, the behavior tree nodes may include: flow control nodes and function block nodes. The details are respectively described below.

### 1. Flow control nodes

The flow control nodes are used for implementing logical control in workflows, and are usually independent of specific service operations in the workcells. Through the flow control nodes, users can create various workflows according to their own needs.

During a specific implementation, the flow control nodes may include: main control nodes, logical control nodes, condition nodes, and the like. Alternatively, the flow control nodes may also include: one or any combination of main control nodes, logical control nodes and condition nodes. The details are respectively described briefly below.

### 1. Main control nodes

The main control nodes may include: some or all of a start node, an end node, a goto node, an anchor node, a stop node and an abort node.

The main control nodes in this embodiment are not standard behavior tree elements. However, in this embodiment, the main control nodes may be configured to control main processes of a workflow and may be linked to a state machine of the workflow. The start node is mandatory. In addition, one of the end node and the goto node may also be mandatory. The main control nodes are mainly used for defining the start and end of the workflow. In addition, other element nodes may control the state machine (such as abort and stop) or annotate critical process steps (such as anchor nodes) that may be skipped.

### 2. Logical control nodes

The logical control nodes may include: some or all of a sequence (Se) node, a reactive sequence (RSe) node, a parallel (Pa) node, an in-process QC (IPQ) node, a priority (Pr) (fallback) node, a reactive priority (RPr) (fallback) node, an if-then-else (ITE) node, and a switch (Sw) node

The logical control nodes can define how to execute branches in a behavior tree, and are configured to implement branch logical control in the workflow, and the like. Each of the nodes is described briefly below:
1) Se node: This node may have one to a plurality of child nodes, and may trigger routing to each child node sequentially in the order of the workflow.
2) RSe node: The function of this node is the same as that of the Se node, but this node will continuously check triggering conditions.
3) Pa node: This node may have one to a plurality of child nodes which are started in order from top to bottom, and all child nodes are executed simultaneously in multiple processes or threads.
4) IPQ node: Quality engineers conduct quality inspection on some process steps. If the inspection fails, an exception handling process is executed. If the inspection is successful, the process continues.
5) Pr node: Each subbranch is executed in order according to the priority. If the execution of the previous subbranch fails, the next subbranch is executed. If any branch is successfully executed, the process passes.
6) RPr node: The function of this node is the same as that of the Pr node, but this node will continuously check triggering conditions.
7) ITE node: This node checks a triggering expression. If the triggering expression is true, a true branch is executed. If the triggering expression is false, a false branch is executed.
8) Sw node: This node checks a triggering expression and executes different branches according to different conditions. If different branches do not meet the conditions, a default branch is executed.

In general, the Se node and the Pa node may drive most of logics in a workflow.

### 3. Condition (C) nodes:

Condition nodes are usually basic logical elements in a behavior tree that check expressions, and are used for executing condition judgment and returning judgment results. Success or failure is returned according to whether the conditions are met. The condition node never returns a running state.

In addition, in other implementations, the condition nodes may also be included in function block nodes. Alternatively, the condition nodes may also be separately used as a type of nodes.

### 2. Function block (FB) nodes:

Function block nodes are used for executing commands and implementing service operations in workflows. In general, if the operation is completed correctly, success is returned; if the operation fails, failure is returned; and when the operation is in progress, running is returned.

In this embodiment, the function block nodes include logical nodes, and may also include some specific types of function block nodes, such as some or all of manual nodes, dynamic nodes, delay nodes, and empty (idle) nodes. The dynamic node is used for dynamically injecting a node instance at a runtime. The manual node represents a manual step that stops at the current node before obtaining a confirmation signal and exits after obtaining the confirmation signal. The delay node represents that the current node exits after a specified delay time. The empty (idle) node represents that no operation is executed, and is a placeholder which may be replaced with any function block node. Each logical node may correspond to one operation template, and each operation template defines at least one type of resources in advance, such as the operations that can be executed by (cooperative robot or PLC devices). For example, the operations may include: actions, methods or skills.

During a specific implementation, each operation template may be composed of an interface part and an implementation part. The implementation part may be an application (such as a containerized application) that includes function codes and runtime dependencies. This application may run independently and is publicly available through a specific network communication interface. The interface part may be logical nodes presented in graphical elements, which, like other behavior tree nodes, may be dragged, connected and configured in a GUI. During a specific implementation, each logical node may have a parameter panel for configuring parameters of the logical node, such as input and output parameters. Of course, these input and output parameters may also be preset with default values.

Each logical node may be configured and executed separately. When the logical node in the behavior tree is executed, the input configured by a user for the logical node will be read and transmitted to the implementation part of the operation template, that is, the corresponding application. After a specific operation such as model conversion is completed, the operation result, such as the converted model, will be converted back to the output of the logical node.

In this embodiment, the interface part and implementation part of each operation template may be stored separately. For example, the node library may only store the interface part, namely the logical nodes, and the implementation part may be stored in a node service module. In this embodiment, the node service module may be referred to as a runtime. The node service module may be located in a server or may also be located locally.

Optionally, the above logical nodes follow an information model interacting with the runtime of the main controller. In this way, standardization of communication between OT domain workflows and main controllers of various OT devices is implemented.

In addition, considering that the service operation corresponding to a function block node may be executed by different main bodies, such as a specific physical device, personnel or other virtualized resources, for the convenience of description, these physical devices, personnel and virtualized resources are collectively referred to as resources herein, and these resources usually refer to the resources that can execute workflows on site as various operation main bodies.

During a specific implementation, the resource that serves as an operation execution body may be used as a common configuration parameter for a function block node, and corresponding resource configurations may be made for the required function block node when a behavior tree is created. Alternatively, when a function block node is created, the resource that serves as an operation execution body is configured for the function block node, so that when a behavior tree is created, there is no need to make resource configurations for the required function block node.

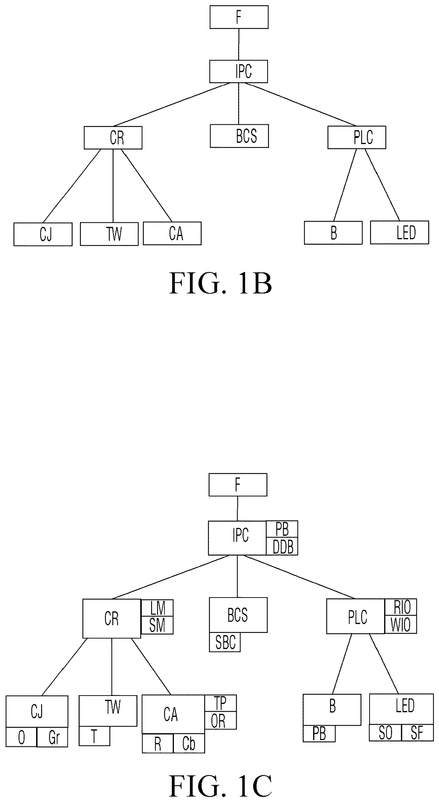

Alternatively, for the convenience of management of resources, these resources may also be represented in the form of resource nodes, and these resource nodes may be stored in the form of a resource knowledge graph. The resource knowledge graph includes: the resource nodes and connecting lines representing relationships among the resource nodes. For example, FIG. 1B shows a schematic view of a resource knowledge graph in an example. As shown in FIG. 1B, the resource knowledge graph is a factory resource knowledge graph, which describes the real system configuration of a factory. Factory (F) nodes have IPC nodes, and the IPC nodes have cooperative robot (CR) nodes, PLC nodes and bar code scanner (BCS) nodes, where the cooperative robot (CR) nodes have clamping jaw (CJ) nodes, torque wrench (TW) nodes and camera (CA) nodes; and the PLC nodes have button (B) nodes and LED alarm light nodes. Of course, in some applications, there may be more than one device of a certain type, such as a cooperative robot, and various devices of this type may be distinguished by reference numbers or models, and will not be elaborated here.

Each function block node may be associated with a resource node, so that the function block node may be instantiated as an operation of the corresponding resource. For example, a logical node may be associated with a device resource node to be instantiated as an operation of the corresponding device. During a specific implementation, a header may be set for a function block node, and the resource associated with the function block node will be displayed in the header.

There are various ways to implement specific association processes. For example, each resource node may be associated with a corresponding function block node in advance, so that when a behavior tree is created, the function block node associated with the corresponding resource may be directly pulled without the need for temporary configuration. For example, FIG. 1C shows a schematic view of associating each resource node with a function block node in an example. As shown in FIG. 1C, corresponding function block nodes are respectively associated with the resources shown in the resource knowledge graph in FIG. 1B. The IPC nodes are associated with press button (PB) nodes and display dialog box on screen (DDB) nodes; the cooperative robot (CR) nodes are associated with linear move (LM) nodes and shutdown mobile (SM) nodes; the PLC nodes are associated with read I/O (RIO) nodes and write I/O (WIO) nodes; the bar code scanner (BCS) nodes are associated with scan bar code (SBC) nodes; the clamping jaw (CJ) nodes are associated with open (O) nodes and grab (Gr) nodes; the torque wrench (TW) nodes are associated with twist (T) nodes; the camera (CA) nodes are associated with register (R) nodes, calibration (Cb) nodes, take photo (TP) nodes and object recognition (OR) nodes; the button (B) nodes are associated with press button (PB) nodes; and the LED alarm light nodes are associated with switch on (SO) nodes and switch off (SF) nodes.

Alternatively, function block nodes may also not be associated with resource nodes in advance, and the required function block node is associated with the corresponding resource node when a behavior tree is created.

Alternatively, there may be both function block nodes associated with resource nodes in advance (referred to as dedicated function block nodes) and function block nodes not associated with resource nodes (referred to as general function block nodes). Although the general function block nodes are not associated with on-site resources, it does not affect the analog simulation of the workflow corresponding to the behavior tree that includes the function block nodes. For example, if a cooperative robot is not purchased yet, in order to verify the feasibility, corresponding general function block nodes may be used for simulation in advance. When it is determined that it has feasibility, procurement may be initiated.

In addition, this embodiment may further include the following decorator nodes:

### 3. Decorator nodes

Decorator nodes are mainly used for decorating function block nodes driven by logical control nodes. For example, decorator nodes can be used for determining whether branches or even individual nodes in a behavior tree can be executed. Decorator nodes may include: some or all of a repeat (Rp) node, a retry (Rt) node, a one-shot (OS) node, a timeout (TO) node, a timer (Tm) node, an inverter (Iv) node, a force run (FR) node, a force OK (FO) node, a force failed (FF) node, and a guard (G) node. Each of the decorator nodes is described briefly below:
1) Iv node: This node may have one child node, and is used for inverting the child node. If the child node fails, success is returned; and if the child node is successful, failure is returned.
2) FO node: This node may have one child node (such as function block node). Regardless of whether the child node is successful, this node will always return success.
3) FF node: This node may have one child node (such as function block node). Regardless of whether the child node is successful, this node will always return failure.
4) Rp node: This node may have one child node (such as function block node), and the number of fixations of the child node may be executed repeatedly.
5) Rt node: This node may have one child node (such as function block node), and the child node may be triggered at most N times. If the child node returns failure, the process is retried, and the number of times is reduced by one. When the number of retries is 0, success is returned. If the child node returns success, the loop is interrupted, and success is also returned. N is a positive integer.
6) OS node: This node may have one child node, indicating that the child node is only executed once in a workflow and is not executed again until the workflow is restarted.
7) TO node: This node may have one child node, and is used for counting the execution time of the child node (such as function block node), and enabling the execution to exit when the specified time is exceeded (even if the execution is not completed).
8) Tm node: This node may have one child node, and the child node (such as function block node) is executed after the specified time is reached.
9) FR node: This node may have one child node. Regardless of whether the child node (such as function block node) is executed completely, a running state will be forcibly returned.
10) G node: This node may have at least one child node, and is used for monitoring the states of all child nodes. When any child node is executed wrongly, an error is reported. When all child nodes are normal, normal is returned.

In other implementations, decorator nodes may also be included in flow control nodes. The flow control nodes may include: all or some of main control nodes, logical control nodes and decorator nodes.

In this embodiment, each behavior tree node may be listed in the form of an icon on the GUI, and users can determine the nodes required for creating a workflow by selecting and dragging icons to be added to a canvas. Further, necessary parameter configuration, such as resource configuration and/or input and output parameter configuration, may also be performed on nodes. If one workcell needs to perform more than one operation defined in the required workflow, the behavior tree corresponding to the workflow may include multiple function block nodes, corresponding flow control nodes may be set according to the sequence and relationships of operations, and the dragged nodes are arranged and connected correspondingly to finally generate a behavior tree corresponding to the workflow. That is, the behavior tree construction operation includes behavior tree node addition and connection operations. Further, the behavior tree construction operation may include an operation of associating resources for the added function block nodes. In addition, the behavior tree construction operation may further include: a configuration operation for input and output parameters of behavior tree nodes.

Step S12A: A behavior tree corresponding to one workflow is generated in response to the behavior tree construction operation. Some or all of the function block nodes in the behavior tree may be associated with resources for executing corresponding service operations. In general, for workflows that need to be implemented by on-site resources, all function block nodes in the behavior tree need to be associated with resources for executing corresponding service operations; and for action flows that do not need to be implemented by on-site resources temporarily, such as workflows for analog simulation, it is not necessary for all function block nodes to be associated with resources for executing corresponding service operations. For example, if a cooperative robot is not purchased yet, in order to verify the feasibility, corresponding general function block nodes may be used for simulation in advance. When it is determined that it has feasibility, procurement may be initiated.

In this embodiment, the behavior tree nodes may be instantiated and connection relationships among the instantiated behavior tree nodes may be established in response to the behavior tree construction operation. Some or all of the instantiated function block nodes are associated with resources for executing corresponding service operations. By executing this step, the added function block node may be instantiated as an operation of the corresponding resource. Then, a behavior tree corresponding to one workflow is generated based on the connection relationships among the instantiated behavior tree nodes.

During a specific implementation, the above behavior tree nodes may be stored in the node library. In addition, for similar application scenarios, in order to avoid the waste of manpower, time and the like in the process of repeatedly constructing behavior trees, the behavior tree (or uninstantiated behavior tree framework) of the corresponding workflow or corresponding subworkflow that is constructed, preferably debugged or successfully executed by users is stored as a workflow node or a subworkflow node. Correspondingly, the node library may further include workflow (WF) nodes and subworkflow (SWF) nodes. When users need to construct a similar behavior tree or construct a behavior tree that includes the workflow or the subworkflow, the corresponding workflow nodes or subworkflow nodes may be selected and configured as necessary to obtain a behavior tree for implementing the required workflow.

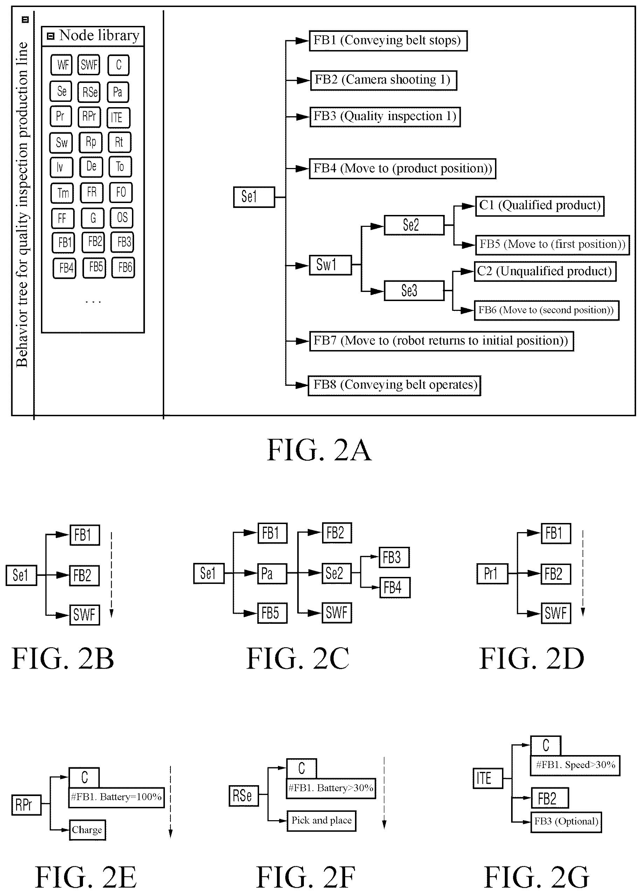

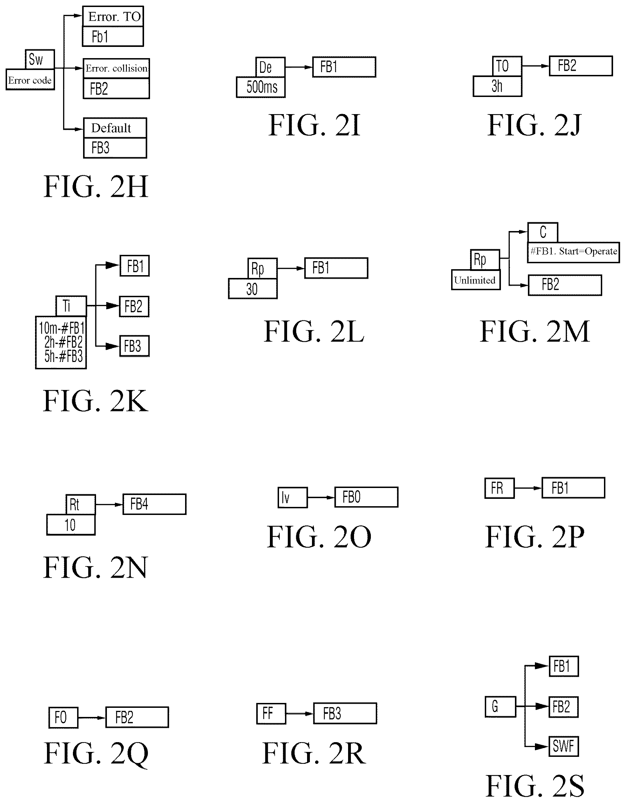

FIG. 2A shows a schematic view of constructing a behavior tree for a workcell of a quality inspection production line in an example. FIG. 2B to FIG. 2S respectively show schematic views of a part of a behavior tree constructed in an example. The direction of an arrow represents an execution sequence of the corresponding nodes.

In the above construction process of the behavior tree representing the workflow, the function block nodes may be understood as being presented in the form of a label graph, and the construction of the behavior tree based on the function block label graph requires the participation of flow control nodes and even decorator nodes. In addition, an embodiment of the present invention further provides a behavior tree construction method based on a function block type graph. In this method, function block nodes are presented in the form of a type graph. In practical applications, the two behavior tree construction methods may coexist. Moreover, when a behavior tree is constructed by one of the methods, the other method is also constructed synchronously. For example, if two function block nodes are connected in sequence based on a function block type graph, when a behavior tree based on the function block label graph is synchronously constructed, a sequence node will be automatically added, and the two function block nodes will be added from top to bottom to the sequence node.

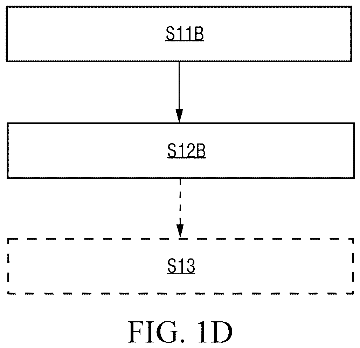

FIG. 1D shows a schematic flowchart of another workflow construction method provided in an embodiment of the present application. As shown in FIG. 1D, the method may include the following steps:
Step S11B: Function block node addition and connection operations performed on a GUI by a user on the basis of function block type graphs are received. In the present application, the type graph and the label graph may be understood as two presentation manners of the same function block node, and are both used for implementing a corresponding service operation.

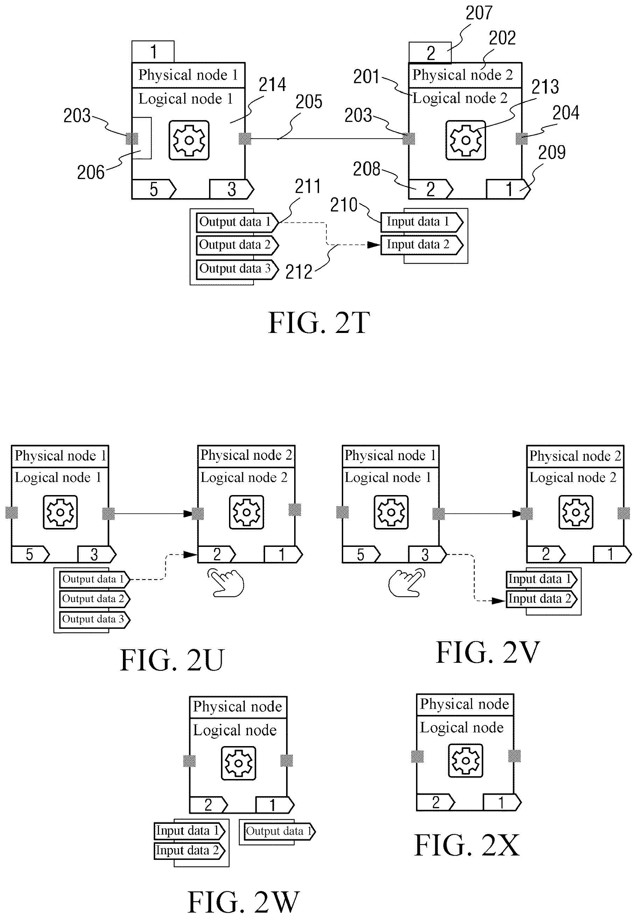

FIG. 2T shows an example of constructing a behavior tree based on function block nodes of a function block type graph in an example. In this example, two function block nodes F1 and F2 are shown. As shown in FIG. 2T, the function block type graph may include:
1) A function block name 201 for indicating types of service operations, such as screw fastening, image collection, video recording, and vision guidance. During a specific implementation, when a function block node is dragged from a node library to a canvas, the default function block name will be generated by adding the default name defined by the function block to the instance number. In FIG. 2U, taking the logical nodes in the function block nodes as an example, names are represented by "logical node 1" and "logical node 2". The function block name is editable, but should be unique in the current global workflow.
2) A function block header 202 for indicating resources for executing service operations. For example, the resource for executing screw fastening is a torque wrench, the resource for executing image collection is a monitor, the resource for executing video recording is a monitor, and the resource for executing vision guidance is a camera. In general, the function block header 202 of a logical node is a physical resource, such as "physical node 1" and "physical node 2" shown in FIG. 2U. As described above, the resource indicated by the function block header 202 may be associated in advance, or the association of the corresponding resource may be completed through resource configuration after the function block node is added.
3) A link input port 203 and a link output port 204 for triggering link connections. In this embodiment, the function block node connection operation may include: a line connection operation between the link output port 204 and the link input port 203 between two function block nodes F1 and F2. Through the line connection operation, a link connection 205 is established between the two function block nodes F1 and F2. The link connection 205 in this example is a unidirectional connection for indicating a workflow running process. For example, the link connection 205 may indicate an execution sequence of two function block nodes, that is, first executing the left function block node F1 and then executing the right function block node F2.

During a specific implementation, in order to avoid a selection error and improve the sensitivity of the line connection between function block nodes, there is a sensitive area 206 in a set range of the link input port 203, which is referred to as a first sensitive area here. When selection and line connection operations performed by a user are received in the first sensitive area, line connection end points are located on the link input port 203. Similarly, there may also be a sensitive area (not shown in the figure) in a set range of the link output port 204, which is referred to as a second sensitive area here. When selection and line connection operations performed by the user are received in the second sensitive area, line connection end points are located on the link output port 204.

In addition, in this embodiment, in response to the line connection operation between the link output port 204 and the link input port 203 between the two function block nodes F1 and F2, an instruction label 207 for indicating an execution sequence of the function block nodes may be further generated for the interconnected function block nodes F1 and F2, and the instruction label 207 is identified on the function block type graphs of the function block nodes F1 and F2, such as 1 and 2 shown in the figure. In addition, the instruction label 205 may also be used as an index for a jump instruction and as a chapter index for an instructional document.

4) An input data chunk 208 for representing a set of all data input ports and an output data chunk 209 for representing a set of all data output ports. In this embodiment, the number of the data input ports of the function block nodes may be identified on the input data chunk 208, such as 5 on the input data chunk 208 of the function block node F1 and 2 on the input data chunk 208 of the function block node F2. If the number of the data input ports is zero, the input data chunk 208 may be hidden. Similarly, the number of the data output ports of the function block nodes may be identified on the output data chunk 209, such as 3 on the output data chunk 209 of the function block node F1 and 1 on the output data chunk 209 of the function block node F2. If the number of the data output ports is zero, the output data chunk 209 may be hidden.

In this embodiment, as shown in FIG. 2U to FIG. 2X, the data input ports of the function block node may be expanded or hidden by clicking the input data chunk 208. The data output ports of the function block node may be expanded or hidden by clicking the output data chunk 209. FIG. 2U shows a schematic view of hiding a data input port of a logical node 2 by clicking. FIG. 2V shows a schematic view of hiding a data output port of a logical node 1 by clicking. FIG. 2W shows a schematic view of simultaneously displaying each data input port and each data output port. FIG. 2X shows a schematic view of simultaneously hiding each data input port and each data output port.

5) A data input port 210 and a data output port 211 for triggering data transmission. In this embodiment, the function block node connection operation may further include: a line connection operation between the data output port 211 and the data input port 210 between corresponding data of the two function block nodes F1 and F2. Through the line connection operation, a data connection 212 is established between the two function block nodes F1 and F2. The data connection 212 in this example is used for indicating the data transmission between the two function block nodes F1 and F2. As shown in FIG. 2U, the data connection 212 is established between the data output port 211 of the output data 1 of the function block node F1 and the data input port 210 of the input data 2 of the function block node F2, indicating that the output data 1 of the function block node F1 serves as the input data 2 of the function block node F2.

During a specific implementation, similar to the link input/output port, in order to avoid a selection error and improve the sensitivity of the line connection between function block nodes, there may also be a sensitive area (not shown in the figure) in a set range of the data input port 210, which is referred to as a third sensitive area here. When selection and line connection operations performed by the user are received in the third sensitive area, line connection end points are located on the data input port 210. Similarly, there may also be a sensitive area (not shown in the figure) in a set range of the data output port 211, which is referred to as a fourth sensitive area here. When selection and line connection operations performed by the user are received in the fourth sensitive area, line connection end points are located on the data output port 211.

6) A function block icon 213. Specifically, the function block icon 213 may be a vector icon 213 for visually representing service operations of function block nodes. Of course, in other implementations, the function block icon 213 may also be omitted.

7) A function block body 214 for bearing the above components. In this embodiment, the function block node addition operation may include: a dragging operation for the function block body 214.

Step S12B: In response to the function block node addition and connection operations, a behavior tree corresponding to one workflow is constructed.

In this step, in response to the function block node addition and connection operations, a behavior tree including flow control nodes and function block nodes based on a function block label graph in S 12A may be synchronously constructed. Similarly, in step S12A, when a behavior tree including flow control nodes and function block nodes based on a function block label graph is constructed, a behavior tree based on the function block type graph in S 12B may also be synchronously constructed. Moreover, the construction interface of the two behavior trees may be switched according to the selection of the user. For example, according to the selection operation performed on the behavior tree based on the function block type graph or the behavior tree based on the function block label graph by the user, the behavior tree based on the function block type graph or the behavior tree based on the function block label graph is switched and displayed.

Further, in other implementations, whether the behavior tree is created based on the function block nodes in the form of the label graph or based on the function block nodes in the form of the type graph, at least one data block may be further added and connected to each function block node in at least one function block node in the behavior tree. Each data block is used for presenting the corresponding data in the service operation of the function block node connected to the data block. The types of data blocks may include some or all of data pairs, data tables, images, videos and charts.

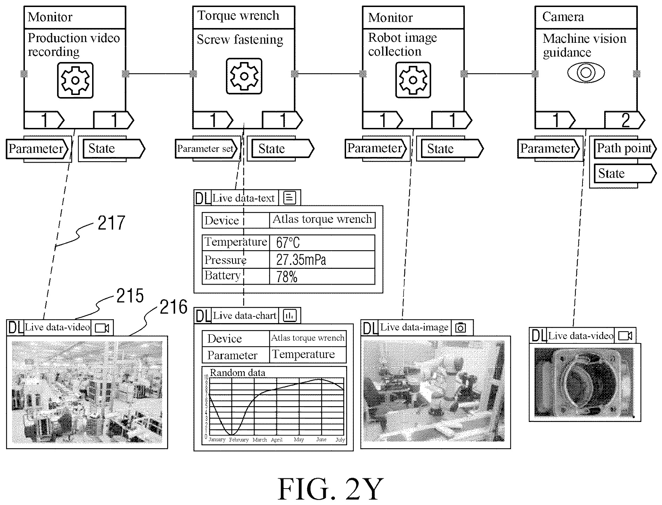

FIG. 2Y shows a schematic view of respectively adding data blocks to four function block nodes in a behavior tree and displaying corresponding data in each data block in an example of the present application. In this example, a behavior tree creation interface based on a function block type graph is taken as an example. As shown in FIG. 2Y, in this example, a data block with the type of live data-video is added to a function block node for production video recording associated with a monitor; a data block with the type of live data-text and a data block with the type of live data-chart are added to a function block node for screw fastening associated with a torque wrench; a data block with the type of live data-image is added to a function block node for robot image collection associated with a monitor; and a data block with the type of live data-video is added to a function block node for machine vision guidance associated with a camera.

As shown in FIG. 2Y, each data block may include a data block label 215 for indicating types of data blocks and a data block body 216 having a display area for presenting specific data. The data block label 215 may be a draggable label. For example, the data block label 215 may be moved to any position in a canvas. The size of the display area of the data block body 216 is adjustable for real-time display of different types of data from a data layer. A monitoring link 217 is established between each data block and the corresponding function block node, and one function block may be mapped to a plurality of data blocks. When a workflow is executed, for example, executed in a runtime, the monitoring and output data corresponding to the function block node will be transmitted to the corresponding data block for real-time display.

The data block in this embodiment is a low code data block, which differs from other SCADA and dashboard systems in that: the low code data block in this embodiment is also a low code element, which may be used as a part of a behavior tree, and all attributes thereof may be managed in the low code logic.

A data source in the low code data block is derived from the data layer, and data may be obtained through an interface provided by the data layer in a runtime or cloud execution engine. The data source may be a time series database, an RDBMS or a NoSQL. The low code data block is a flexible, scalable and adaptable system, which may be applied to any function block node that may be associated with a physical device. In short, the data block for implementing data monitoring may be considered as a visual interface of the data layer.

Further, in other implementations, whether the behavior tree is created based on the function block nodes in the form of the label graph or based on the function block nodes in the form of the type graph, at least one data block may be further added and connected to each function block node in at least one function block node in the behavior tree. Each data block is used for presenting the corresponding data in the service operation of the function block node connected to the data block. The types of data blocks may include some or all of data pairs, data tables, images, videos and charts.

FIG. 2Y shows a schematic view of respectively adding data blocks to four function block nodes in a behavior tree and displaying corresponding data in each data block in an example of the present application. In this example, a behavior tree creation interface based on a function block type graph is taken as an example. As shown in FIG. 2Y, in this example, a data block with the type of live data-video is added to a function block node for production video recording associated with a monitor; a data block with the type of live data-text and a data block with the type of live data-chart are added to a function block node for screw fastening associated with a torque wrench; a data block with the type of live data-image is added to a function block node for robot image collection associated with a monitor; and a data block with the type of live data-video is added to a function block node for machine vision guidance associated with a camera.

As shown in FIG. 2Y, each data block may include a data block label 215 for indicating types of data blocks and a data block body 216 having a display area for presenting specific data. The data block label 215 may be a draggable label. For example, the data block label 215 may be moved to any position in a canvas. The size of the display area of the data block body 216 is adjustable for real-time display of different types of data from a data layer. A monitoring link 217 is established between each data block and the corresponding function block node, and one function block may be mapped to a plurality of data blocks. When a workflow is executed, for example, executed in a runtime, the monitoring and output data corresponding to the function block node will be transmitted to the corresponding data block for real-time display.

The data block in this embodiment is a low code data block, which differs from other SCADA and dashboard systems in that: the low code data block in this embodiment is also a low code element, which may be used as a part of a behavior tree, and all attributes thereof may be managed in the low code logic.

A data source in the low code data block is derived from the data layer, and data may be obtained through an interface provided by the data layer in a runtime or cloud execution engine. The data source may be a time series database, an RDBMS or a NoSQL. The low code data block is a flexible, scalable and adaptable system, which may be applied to any function block node that may be associated with a physical device. In short, the data block for implementing data monitoring may be considered as a visual interface of the data layer.

In addition, in other implementations, this embodiment may further include the following step S13 as shown by the dashed lines in FIG. 1A and FIG. 1B.

Step S13: The behavior tree is analyzed, and the workflow corresponding to the behavior tree is deployed to a runtime of the corresponding workcell so that the runtime executes the workflow to control the resources in the workcell to execute the service operations according to the workflow. For the behavior tree connected with data blocks, the runtime may further provide the corresponding data obtained during the execution of the service operation to the corresponding data block for displaying. During a specific implementation, the runtime may provide the corresponding data obtained during the execution of the service operation to the corresponding data block for displaying directly or through a third-party device.

During a specific implementation, the workcell may include a main controller, and at this time, the runtime may be located on the main controller of the workcell. Correspondingly, device resources in the resources may be connected to the main controller, and the main controller controls the connected device resources to execute corresponding operations according to the workflow of the runtime; and human resources and the like in the resources may directly execute corresponding operations according to workflow prompts of the runtime.

In this embodiment, the behavior tree may be stored in a Markup language such as an Extensible Markup Language (XML), and may be validated by an XML Schema (XSD) prototype to verify that the XML format of the behavior tree is correct. After the behavior tree is analyzed, a workflow represented in the form of "node link assembly" may be obtained, and then, the workflow is compiled and downloaded to the runtime of the main controller of the corresponding workcell.

In addition, according to the definition of Gartner, the OT domain usually refers to an operational technology (OT), which combines hardware and software, and changes of processes or events in enterprises may be detected or triggered by directly monitoring and/or controlling physical devices (known as OT devices). The OT uses a computer to monitor or change the physical state of an industrial control system (ICS), and the like. The ICS is a facility, system or device implemented based on a computer, and is configured to remotely monitor and/or control critical industrial processes to implement physical functions. The term "OT" is used for distinguishing the ICS from the traditional information technology (IT) system in terms of technical implementations and functions.

At present, there are many IT low code development tools or platforms on the market, where some tools are designed for experienced IT engineers in the usage scenarios of the Internet of things, and OT engineers and junior IT engineers are difficult to understand the paradigm thereof; and some tools are more suitable for usage scenarios of IT-domain low code development and may not be well adapted to the OT domain.

The above workflow construction method in this embodiment may be used for the OT domain, and serves as an OT-domain low code development method. Specifically, the workflow construction method shown in FIG. 1A may be implemented on an OT domain such as an OT-domain low code development platform. Correspondingly, the workflow may be an OT domain workflow; the workcell may be a workcell in the OT domain; and the device may be an OT device. Here, the OT device may include but is not limited to: an Internet of Things (IoT) device, a programmable logic controller (PLC), robotics, a manual process, an industrial personal computer (IPC), and the like.

In addition, in the embodiment of the present application, it is considered that currently, the fusion of the IT domain and the OT domain is becoming increasingly important in the process of enterprise digital transformation. In order to fuse the IT domain and the OT domain into an ITOT system, currently, an urgent problem to be solved is how enterprises can collect OT domain data and control OT domain processes in a manner that is easy to understand, rather than a manner of IT domain programming.

The above workflow construction method in this embodiment may be used for the ITOT system, and serves as an OT-domain low code development method that may be fused with the IT domain. Similarly, the workflow construction method shown in FIG. 1A may be implemented on an OT domain such as an OT-domain low code development platform. Correspondingly, the workflow may be an OT domain workflow; and the workcell may be a workcell in the OT domain.

In addition, in order to implement the fusion of the IT domain and the OT domain, based on the workflow construction method shown in FIG. 1A, the method further includes: a microservice is generated based on the behavior tree so that an IT device triggers the runtime of the main controller of the workcell to execute the OT domain workflow by calling the microservice. During a specific implementation, the IT device may directly call the microservice or call the microservice through a knowledge middle platform. Correspondingly, in this embodiment, the runtime may provide the corresponding data obtained during the execution of the service operation to the corresponding data block for displaying through the microservice. Alternatively, the runtime may provide the corresponding data obtained during the execution of the service operation to the knowledge middle platform, and the knowledge middle platform processes the data (including filtering) and then provides the data to the corresponding data block for displaying directly or through the microservice.

When a microservice is generated based on the behavior tree, an API for the microservice may be generated based on the behavior tree. The processing procedure in the API includes each operation in the OT domain workflow, input parameters of the API are parameters obtained from an input port of the OT domain workflow, and output parameters of the API are parameters outputted by an output port of the OT domain workflow.

To enable the IT domain to call the microservice, it is necessary for the IT domain to obtain information of the microservice. Specific implementation manners include but are not limited to the following two:
Manner 1:
   In the manner 1, OT domain code developers can notify IT domain code developers of the name and IP address of each generated microservice. In this way, the IT domain code developers can directly write the information of each microservice into codes during the development process, thereby enabling IT devices to call the microservice. The manner 1 is more suitable for scenarios with fewer microservices.
Manner 2:
   In the manner 2, registration and discovery mechanisms may be used. Each microservice may be registered on the knowledge middle platform, so that an IT-domain code development tool may enable IT devices to discover the connected microservice through the knowledge middle platform. During a specific implementation, an IT-domain code development tool may be configured to perform code development to enable IT domain devices to discover the connected microservice through the knowledge middle platform. The apparatus that completes the registration of the microservice may be an OT domain microservice generator or a third-party apparatus. The third-party apparatus may be considered as a part of the OT-domain low code development platform, or implemented in the knowledge middle platform. The manner 2 is more suitable for scenarios with more microservices.

In this embodiment, IT devices may include but are not limited to: a manufacturing operation management (MOM) system, a manufacturing execution system (MES), an enterprise resource planning (ERP) system, an enterprise service bus (ESB) system, a product lifecycle management (PLM) system, and the like.

In this embodiment, an IT-domain code development tool may be programmed to enable an IT device to call the microservice through a knowledge middle platform, so as to trigger the runtime of the main controller of the workcell to execute the OT domain workflow, thereby implementing the control of OT domain processes by the IT-domain code development platform, that is, implementing the fusion of the IT domain and the OT domain. Here, the microservice is automatically generated by the OT domain microservice generator based on the OT domain behavior tree without the need for the IT-domain code development tool to understand the details of the OT domain workflow, and only an identifier (such as name) and an IP address of the microservice need to be obtained without the need for IT domain developers to understand OT domain devices and control processes, thereby being easy to implement and understand.

The applicable fields of the embodiment of the present application include but are not limited to: industrial automation, logistics, laboratory, maritime, smart grid, electric vehicle infrastructure, electric vehicle, building automation, smart city, water treatment, garbage recycling, smart farm, and the like.

The workflow construction method in the embodiment of the present application is described in detail above, and the workflow construction system in the embodiment of the present application will be described in detail below. The workflow construction system in the embodiment of the present application can be configured to implement the workflow construction method in the embodiment of the present application. The details not disclosed in detail in the system embodiment of the present invention can refer to the corresponding descriptions in the method embodiment of the present invention, which will not be repeated here.

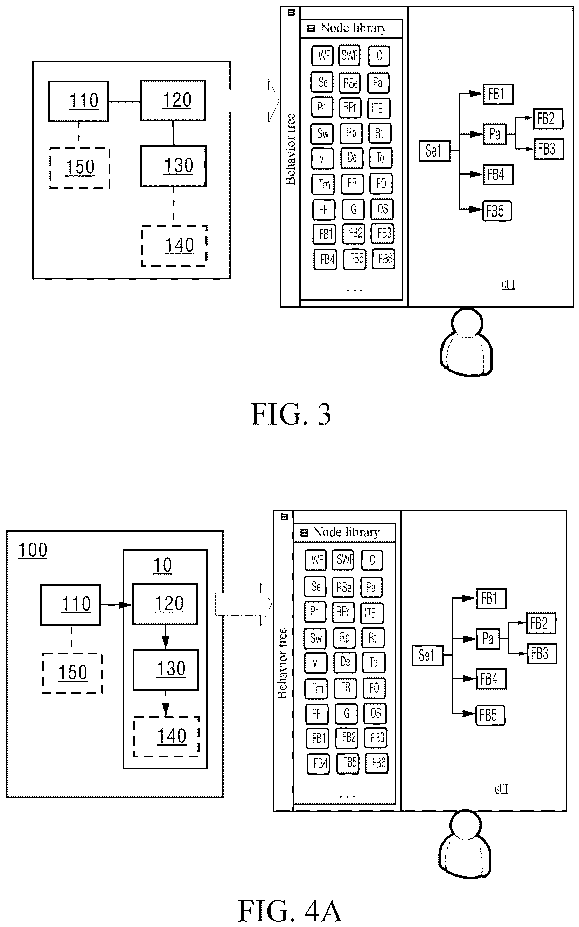

FIG. 3 shows a schematic structural view of a workflow construction system provided in an embodiment of the present application. As shown in FIG. 3, the system may include: a node library 110, a graphical interface module 120 and an editing and processing module 130.

Behavior tree nodes for constructing a behavior tree are arranged in the node library 110. The behavior tree nodes may include: flow control nodes and function block nodes. One behavior tree is used for representing one workflow, and the workflow is used for defining the operation to be executed by one workcell. The flow control nodes are used for implementing logical control in the workflow. The function block nodes are used for implementing service operations in the workflow. The function block nodes may include: logical nodes, where each logical node corresponds to one operation template, each operation template defines at least one type of resources in advance, such as the operations that can be executed by a device, and the operations include: actions, methods or skills. In addition, the node library 110 may further include various types of data blocks, and each data block is used for presenting the corresponding data in the service operation of the function block node connected to the data block. The types of the data blocks include: some or all of the data types such as data pairs, data tables, images, videos and charts.

In one implementation, the resources are represented in the form of resource nodes, and all the resource nodes are associated and stored in the form of a resource knowledge graph. The resource knowledge graph includes: the resource nodes and connecting lines representing relationships among the resource nodes. Correspondingly, in this embodiment, as shown by the dashed line in the figure, the system further includes: a resource library 150, configured to store the resources in the form of a resource knowledge graph, where each resource can execute at least one service operation.

In one implementation, the flow control nodes may include: some or all of main control nodes, logical control nodes and condition nodes. The main control nodes may include: some or all of a start node, an end node, a goto node, an anchor node, a stop node and an abort node. The logical control nodes include: some or all of an Se node, an RSe node, a Pa node, an IPQ node, a Pr node, an RPr node, an ITE node and an Sw node.

In one implementation, the function block nodes may further include: some or all of a manual node, a dynamic node, a delay node and an empty (idle) node.

In one implementation, the behavior tree nodes further include: a decorator node which may include: some or all of an Rp node, an Rt node, an OS node, a TO node, a Tm node, an Iv node, an FR node, an FO node, an FF node and a G node.

In one implementation, some or all of the function block nodes in the node library 110 are respectively bound with resources that execute the service operations corresponding to the function block nodes.

In addition, in another implementation, the function block nodes in the node library 110 may be presented in the form of label graphs as shown in FIG. 2A to FIG. 2T, or in the form of type graphs as shown in FIG. 2T to FIG. 2X. Of course, in other implementations, the function block nodes in the node library 110 may also be presented only in the form of a type graph. The specific structure of the function block nodes in the form of a function block type graph may be shown in FIG. 2T. The details are not repeated here.

The graphical interface module 120 is configured to provide a GUI for users to perform behavior tree construction based on the behavior tree nodes in the node library 110. In addition, data block addition and connection operations may also be performed on the GUI.

During a specific implementation, the GUI may include a first GUI for constructing a behavior tree based on flow control nodes and function block nodes in the form of a function block label graph, and a second GUI for constructing a behavior tree based on function block nodes in the form of a function block type graph, and the two GUIs may be switched and displayed according to the selection of users. The behavior tree construction operation may include function block node addition and connection operations. On the second GUI, the function block node addition operation may include: a dragging operation for the function block body; and the function block node connection operation may include: a line connection operation between the link output port and the link input port between two function block nodes, and a line connection operation between the data output port and the data input port between corresponding data of two function block nodes.

Each behavior tree node may be listed in the form of an icon on the GUI.

The editing and processing module 130 is configured to generate a behavior tree corresponding to one workflow in response to the behavior tree construction operation. In addition, the editing and processing module 130 is also configured to add and connect at least one data block to each function block node in at least one function block node in the behavior tree in response to the data block addition and connection operations.

During a specific implementation, in one implementation, the editing and processing module 130 can instantiate the behavior tree nodes and establish connection relationships among the instantiated behavior tree nodes in response to the behavior tree construction operation; and generate a behavior tree corresponding to one workflow based on the connection relationships among the instantiated behavior tree nodes. Some or all of the instantiated function block nodes are associated with resources for executing corresponding service operations. For example, through this operation, logical nodes are instantiated as operations of corresponding resources such as devices.

In this embodiment, each behavior tree node and each data block may be listed in the form of an icon on the GUI, and users can determine the nodes required for creating a workflow by selecting and dragging icons to be added to a canvas. Further, necessary parameter configuration, such as resource configuration and/or input and output parameter configuration, may also be performed on nodes.

If one workcell needs to perform more than one service operation defined in the required workflow, the behavior tree corresponding to the workflow may include multiple logical nodes, the execution sequence of the logical nodes is determined according to the sequence and relationships of operations, and the dragged nodes are arranged and connected correspondingly to finally generate a behavior tree corresponding to the workflow.

In one implementation, the behavior tree construction operation may further include: an operation of associating resources with the added function block nodes.

Corresponding to the method shown in FIG. 1A, the workflow construction system in this embodiment may further include: an analyzing and deploying module 140, configured to analyze the behavior tree, and deploy the workflow corresponding to the behavior tree to a runtime of the corresponding workcell so that the runtime executes the workflow to control the resources in the workcell to execute the service operations according to the workflow. Further, the corresponding data obtained during the execution of the service operation may be provided to the corresponding data block for displaying. Specifically, the workcell may include a main controller, and at this time, the runtime may be located on the main controller of the workcell. Correspondingly, device resources in the resources may be connected to the main controller, and the main controller controls the connected device resources to execute corresponding operations according to the workflow of the runtime; and human resources and the like in the resources may directly execute corresponding operations according to workflow prompts of the runtime.

FIG. 4A shows an OT-domain low code development platform 100 provided in an embodiment of the present application. The platform 100 can be configured to implement the workflow construction system shown in FIG. 3.

As described above, currently, there is no low code development tool and platform suitable for an OT domain. In the platform 100 shown in FIG. 4A, because operation templates for various OT devices to perform operations are defined in advance (which can be considered as providing the capability of the OT domain), corresponding logical nodes are constructed based on the operation templates, and other behavior tree nodes for constructing an OT domain workflow are also arranged, a behavior tree corresponding to the OT domain workflow can be created conveniently and quickly to implement low code development suitable for the OT domain. Development engineers do not need to have a deep understanding of various OT devices to implement OT domain development.

Specifically, as shown in FIG. 4A, the OT-domain low code development platform 100 may include:
an OT-domain low code development tool 10. The OT-domain low code development tool 10 may be configured to implement the graphical interface module 120 and the editing and processing module 130 in the workflow construction system shown in FIG. 3, and further implement the analyzing and deploying module 140 in the workflow construction system shown in FIG. 3. The node library 110 and resource library 150 in the workflow construction system shown in FIG. 3 may be stored on a memory.

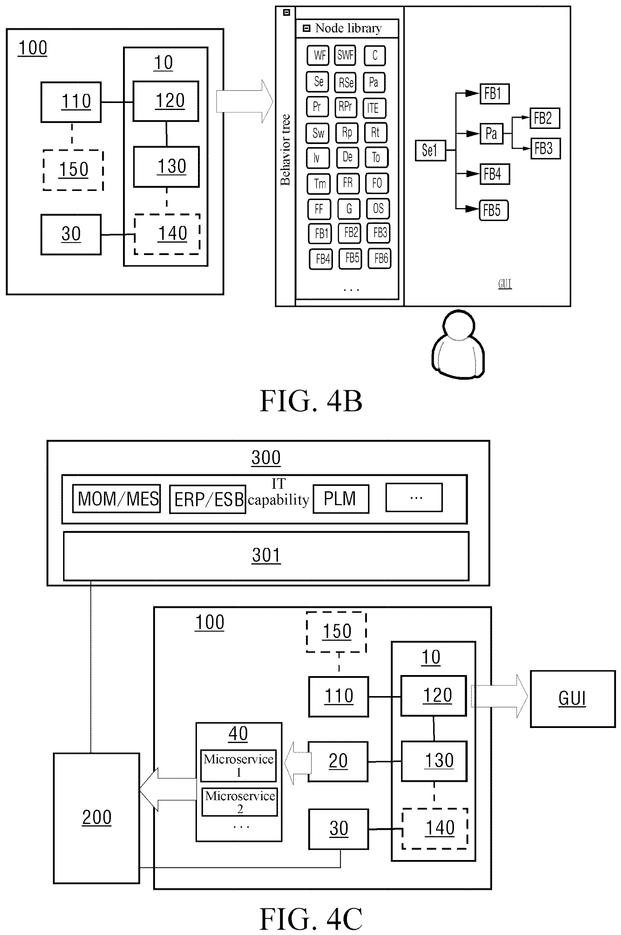

Further, as shown in FIG. 4B, the OT-domain low code development platform 100 may further include a runtime 30 of the above workcell. The OT-domain low code development tool 10 can deploy the OT domain workflow corresponding to the generated behavior tree to the runtime 30 of the workcell, so that the runtime 30 executes the workflow to control various OT resources such as OT devices in the workcell to execute operations according to the OT domain workflow.

The composition of the OT-domain low code development platform 100 shown in FIG. 4A and FIG. 4B only involves the OT domain. However, the fusion of the IT domain and the OT domain has become increasingly important for enterprise digital transformation. What needs to be achieved is how enterprises can use an easy-to-understand and non-IT-programming manner to control the processes of the OT domain. The OT-domain low code development platform 100 shown in FIG. 4C solves the problem of how to control the processes of the OT domain through an IT-domain code development platform 300. As shown in FIG. 4C, based on the structure shown in FIG. 4B, the OT-domain low code development platform 100 may further include an OT domain microservice generator 20 which can generate a microservice 40 based on an OT domain behavior tree. In this way, an IT-domain code development tool 301 may be programmed to enable an IT device to call the microservice 40 through a knowledge middle platform 200, so as to trigger the runtime 30 of the main controller of the workcell to execute the OT domain workflow, thereby implementing the control of OT domain processes by the IT-domain code development platform 300, that is, implementing the fusion of the IT domain and the OT domain. Here, the microservice 40 is automatically generated by the OT domain microservice generator 20 based on the OT domain behavior tree without the need for the IT-domain code development tool 301 to understand the details of the OT domain workflow, and only an identifier (such as name) and an IP address of the microservice 40 need to be obtained without the need for IT domain developers to understand OT domain devices and control processes, thereby being easy to implement and understand.

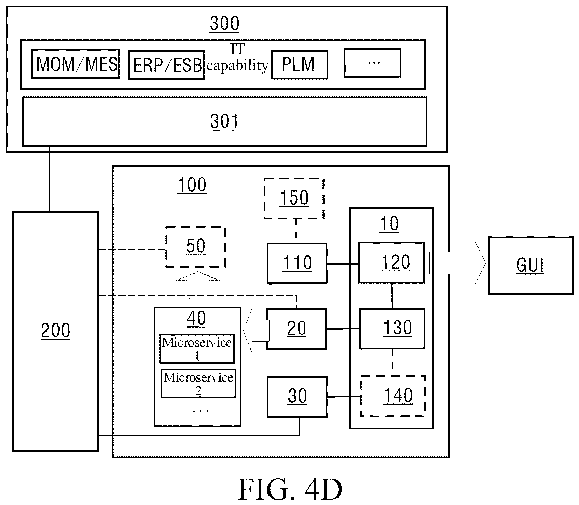

To enable the IT domain to call the microservice 40, it is necessary for the IT domain to obtain information of the microservice 40. Corresponding to the method shown in FIG. 1A, manners that can be implemented include but are not limited to the following two:
Manner 1:
   In the manner 1, OT domain code developers can notify IT domain code developers of the name and IP address of each generated microservice 40. In this way, the IT domain code developers can directly write the information of each microservice 40 into codes during the development process, thereby enabling IT devices to call the microservice 40. The manner 1 is more suitable for scenarios with fewer microservices.
Manner 2:
   In the manner 2, registration and discovery mechanisms may be used. Each microservice 40 may be registered on the knowledge middle platform 200, so that the IT-domain code development tool 301 may use code development to enable IT domain devices to discover the connected microservice 40 through the knowledge middle platform 200. The apparatus that completes the registration of the microservice 40 may be the OT domain microservice generator 20 or a third-party apparatus 50 as shown in FIG. 4D. The third-party apparatus 50 may be considered as a part of the OT-domain low code development platform 100, or implemented in the knowledge middle platform 200. The manner 2 is more suitable for scenarios with more microservices. By registering microservices on the knowledge middle platform, IT devices can more effectively call microservices, thereby strengthening the fusion of the OT domain and the IT domain.

Optionally, the OT domain microservice generator 20 can generate an API for the microservice 40 based on the OT domain behavior tree, where the processing procedure in the API may include the operation of each function block in the OT domain workflow, input parameters of the API are parameters obtained from an input port of the OT domain workflow, and output parameters of the API are parameters outputted by an output port of the OT domain workflow.

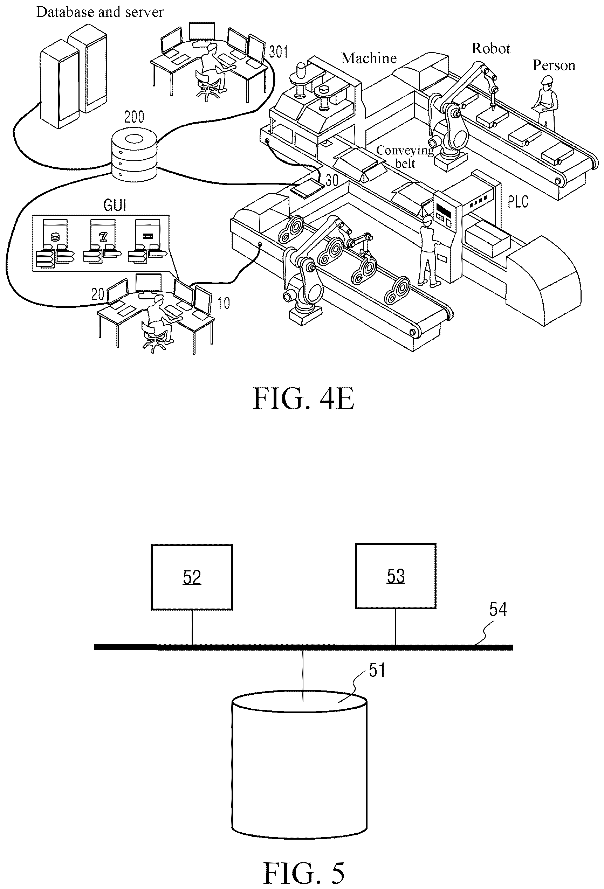

An application scenario of the OT-domain low code development platform 100 provided in an embodiment of the present application in the field of industrial automation is shown in FIG. 4E. The low code development tool 10 generates a behavior tree corresponding to the OT domain workflow under the operation of users, and the OT domain workflow defines the operation to be executed by a production line as a workcell shown on the right side in FIG. 4E. A corresponding workflow is generated based on the behavior tree and published to the runtime 30, so that the runtime 30 controls the completion of the production line operation of the workcell. Furthermore, based on the behavior tree, a corresponding microservice can be generated by the microservice generator 20 and registered in the knowledge middle platform 200, so that the IT-domain code development tool 301 can call the corresponding microservice through the knowledge middle platform 200. Users can edit the OT domain behavior tree by dragging and editing various nodes including function block nodes as shown in the GUI at the lower left corner in FIG. 4E. For example: first, the required data (such as workpiece processing parameters) can be obtained from a database and a server through the knowledge middle platform 200 to control the operation of the entire workcell. Here, the workcell is a production line, and the production line includes machines, conveying belts, mechanical arms, personnel, PLCs, AGBs, and the like. During a specific implementation, the IT-domain code development tool 301 and the low code development tool 10 may be located on the same hardware device, such as on the same computer.

FIG. 5 shows a schematic structural view of another workflow construction system provided in an embodiment of the present application. As shown in FIG. 5, the system can be configured to implement the method shown in FIG. 1A, or implement the workflow construction system shown in FIG. 3, or implement the workflow construction system according to any one of FIG. 4A to FIG. 4D, namely the OT-domain low code development platform 100. The above OT-domain low code development tool 10, OT domain microservice generator 20, runtime 30 and third-party apparatus 60 may all be implemented as separate hardware devices, such as servers, workstations, single chip microcomputers or processing chips. Alternatively, these apparatuses may be implemented on the same hardware device and stored as software programs in at least one memory, and the above OT-domain low code development method is implemented by calling at least one processor. The node library 110, the resource library 150 and each generated microservice 40 may be stored in at least one memory.

As shown in FIG. 5, the system may include: at least one memory 51, at least one processor 52 and at least one display 53. In addition, the system may also include some other components, such as communication ports (not shown in FIG. 5), and the like. These components communicate with each other through a bus 54.

At least one memory 51 is configured to store computer programs. At least one memory 51 may include a computer-readable medium, such as a random access memory (RAM). In addition, at least one memory 51 may also store an operating system, and the like. The operating system includes but is not limited to: Android operating system, Symbian operating system, Windows operating system, Linux operating system, and the like. The above computer storage program may include the following program modules: a node library 110, a graphical interface module 120, an editing and processing module 130 and an analyzing and deploying module 140, and optionally may also include an OT domain microservice generator 20, a runtime 30 and a third-party apparatus 50.

At least one processor 52 is configured to call the computer program stored in at least one memory 51 to execute the workflow construction method described in the embodiment of the present application. At least one processor 52 may be a microprocessor, an application specific integrated circuit (ASIC), a digital signal processor (DSP), a central processing unit (CPU), a graphics processing unit (GPU), a state machine, or the like. Data may be received and transmitted through the communication port.

At least one display 53 is configured to display a GUI.

Specifically, at least one processor 52 is configured to call the computer program stored in at least one memory 51, so that the system executes the operation in the workflow construction method described in any of the above implementations.

In addition, a communication interface is configured to implement communication with other devices, such as communication with the knowledge middle platform 200.

In the embodiment of the present application, the OT-domain low code development tool 10 for implementing the graphical interface module 120, the editing and processing module 130 and the analyzing and deploying module 140 may be a lightweight web-based application, which may be implemented on industrial sites (such as edge devices or local servers), or may be implemented on the cloud side (public clouds such as AWS or private clouds such as OpenStack). A visual engineering paradigm is derived from a function block typed diagram (FBTD). The OT domain microservice generator 20 may use modern translation programming languages to generate a standard API such as RESTful or RPC. The runtime 30 may simply implement the OT domain workflow and provide openness based on an ecosystem of an open source community (such as Python). The runtime 30 may be deployed on an embedded IoT device such as a single board computer (SBC).

It should be mentioned that the embodiment of the present application may include an apparatus with an architecture different from that shown in FIG. 5. The above architecture is only illustrative and is configured to explain a workflow construction method provided in the embodiment of the present application.

In addition, an embodiment of the present application further provides an IT domain and OT domain fusion system, namely an ITOT system, which may include an IT device and a workflow construction system in any implementation of the present application. In addition, the system may further include: an IT-domain code development platform 300 shown in FIG. 4C and FIG. 4D.

In addition, an embodiment of the present application further provides a computer-readable storage medium. The computer-readable storage medium stores computer-readable codes, and the computer-readable codes, when executed by a processor, cause the processor to execute the above workflow construction method. In addition, an embodiment of the present application further provides a computer program product. The computer program product is tangibly stored on a computer-readable medium and includes computer-readable instructions, and the computer-readable instructions, when executed, cause at least one processor to execute the steps in the workflow construction method in the embodiment of the present application.

Specifically, a system or an apparatus provided with a storage medium may be provided. The storage medium stores computer-readable codes for implementing functions of any implementation in the above embodiment, and a computer (or a CPU or an MPU) of the system or the apparatus is enabled to read and execute the computer-readable codes stored in the storage medium. In addition, the operating system and the like operated on the computer may complete some or all of the actual operations through instructions based on the computer-readable codes. The computer-readable codes read from the storage medium may also be written to the memory arranged in an expansion board inserted into the computer, or written to the memory in an expansion unit connected to the computer, and then, instructions based on the computer-readable codes cause the CPU and the like installed on the expansion board or the expansion unit to execute some or all of the actual operations, thereby implementing the functions of any of the above implementations. In this embodiment, examples of the computer-readable medium include but are not limited to a floppy disk, a CD-ROM, a magnetic disk, an optical disk (such as CD-ROM, CD-R, CD-RW, DVD-ROM, DVD-RAM, DVD-RW, or DVD+RW), a memory chip, an ROM, an RAM, an ASIC, a configured processor, an all-optical medium, all magnetic tapes or other magnetic media, or any other medium from which a computer processor can read instructions. In addition, various other forms of computer-readable media may transmit or carry instructions to a computer, including routers, private or public networks, or other wired and wireless transmission devices or channels. For example, computer-readable instructions may be downloaded from a server computer or cloud through a communication network. Instructions may include codes of any computer programming language, including C, C++, C language, Visual Basic, java and JavaScript.

It should be noted that not all steps and modules in the above processes and system structure drawings are necessary, and some steps or modules may be omitted according to actual requirements. An execution sequence of the steps is not fixed and may be adjusted according to requirements. The system structure described in the above embodiments may be a physical structure or a logical structure. That is, some modules may be implemented by the same physical entity, or some modules may be implemented by a plurality of physical entities, or may be implemented by some components in a plurality of independent devices together.

The above descriptions are merely preferred embodiments of the present invention, but are not intended to limit the present invention. Any modification, equivalent replacement, or improvement made within the spirit and principle of the present invention shall fall within the protection scope of the present invention.

## Claims

1. A workflow construction method, comprising:
receiving function block node addition and connection operations performed on a graphical user interface (GUI) by a user on the basis of function block type graphs, wherein each function block node correspondingly implements a service operation; each function block type graph comprises: a function block name for indicating the type of a service operation, a function block header for indicating a resource for executing a service operation, a link input port and a link output port for triggering link connection, an input data chunk for representing a set of all data input ports and an output data chunk for representing a set of all data output ports, a data input port and a data output port for triggering data transmission, and a function block body for bearing each component; the function block node addition operation comprises: a dragging operation for the function block body; the function block node connection operation comprises: a line connection operation between the link output port and the link input port between two function block nodes, and a line connection operation between the data output port and the data input port between corresponding data of two function block nodes; and
constructing a behavior tree corresponding to one workflow in response to the function block node addition and connection operations.

2. The workflow construction method according to claim 1, wherein the function block type graph further comprises: a first sensitive area located in a set range of the link input port, wherein when selection and line connection operations performed by the user are received in the first sensitive area, line connection end points are located on the link input port; and
a second sensitive area located in a set range of the link output port, wherein when selection and line connection operations performed by the user are received in the second sensitive area, line connection end points are located on the link output port.

3. The workflow construction method according to claim 1, wherein the function block type graph further comprises: a third sensitive area located in a set range of the data input port, wherein when selection and line connection operations performed by the user are received in the third sensitive area, line connection end points are located on the data input port; and
a fourth sensitive area located in a set range of the data output port, wherein when selection and line connection operations performed by the user are received in the fourth sensitive area, line connection end points are located on the data output port.

4. The workflow construction method according to claim 1, wherein the number of the data input ports of the function block nodes is identified on the input data chunk; and the number of the data output ports of the function block nodes is further identified on the output data chunk.

5. The workflow construction method according to claim 1, further comprising: expanding or hiding the data input ports of the function block node by clicking the input data chunk; and
expanding or hiding the data output ports of the function block node by clicking the output data chunk.

6. The workflow construction method according to claim 1, wherein the function block type graph further comprises: a function block vector icon located on the function block body.

7. The workflow construction method according to claim 1, further comprising: generating an instruction label for indicating an execution sequence of the function block nodes for the interconnected function block nodes and identifying the instruction label on the function block type graphs of the function block nodes in response to the line connection operation.

8. The workflow construction method according to any one of claims 1 to 7, further comprising: synchronously constructing a behavior tree comprising flow control nodes and function block nodes based on a function block label graph in response to the function block node addition and connection operations, wherein the flow control nodes are used for achieving logical control in the workflow; and
switching and displaying the behavior tree based on the function block type graph or the behavior tree based on the function block label graph according to a selection operation performed on the behavior tree based on the function block type graph or the behavior tree based on the function block label graph by the user.

9. The workflow construction method according to claim 8, further comprising: analyzing the behavior tree, and deploying the workflow corresponding to the behavior tree to a runtime of a corresponding workcell so that resources in the workcell execute operations according to the workflow.

10. A workflow construction system, comprising:
a node library (110), in which function block nodes for constructing a behavior tree are arranged, wherein the function block nodes are presented in the form of a function block type graph on a GUI; each function block type graph comprises: a function block name for indicating the type of a service operation, a function block header for indicating a resource for executing a service operation, a link input port and a link output port for triggering link connection, an input data chunk for representing a set of all data input ports and an output data chunk for representing a set of all data output ports, a data input port and a data output port for triggering data transmission, and a function block body for bearing each component;
a graphical interface module (120), configured to provide a GUI for a user to perform function block node addition and connection operations, wherein the function block node addition operation comprises: a dragging operation for the function block body; the function block node connection operation comprises: a line connection operation between the link output port and the link input port between two function block nodes, and a line connection operation between the data output port and the data input port between corresponding data of two function block nodes; and
an editing and processing module (130), configured to construct a behavior tree corresponding to one workflow in response to the function block node addition and connection operations.

11. The workflow construction system according to claim 10, further comprising: an analyzing and deploying module (140), configured to analyze the behavior tree, and deploy the workflow corresponding to the behavior tree to a runtime (30) of the corresponding workcell so that the resources in the workcell execute the operations according to the workflow.

12. A workflow construction system, comprising:
at least one memory (51), configured to store computer-readable codes; and
at least one processor (52), configured to call the computer-readable codes to execute steps in the workflow construction method according to any one of claims 1 to 9.

13. An IT domain and OT domain fusion system, comprising:
an IT device; and
a workflow construction system according to any one of claims 10 to 12, wherein the workflow is an OT domain workflow; the workcell is a workcell in an OT domain; the resources are OT resources; and the workflow construction system further comprises: an OT domain microservice generator (20), configured to generate a microservice (40) based on the behavior tree so that the IT device triggers the runtime (30) of the workcell to execute the OT domain workflow by calling the microservice (40).

14. A computer-readable medium, wherein the computer-readable medium stores computer-readable instructions, and the computer-readable instructions, when executed by a processor, cause the processor to execute steps in the workflow construction method according to any one of claims 1 to 9.

15. A computer program product, wherein the computer program product is tangibly stored on a computer-readable medium and comprises computer-readable instructions, and the computer-readable instructions, when executed, cause at least one processor to execute steps in the workflow construction method according to any one of claims 1 to 9.
